# FASCICULE DE BREVET EUROPEEN

(11) **EP 0 419 341 B1**
(45) Date de publication et mention de la délivrance du brevet: **26.06.1996**
(21) Numéro de dépôt: 90402564.0
(22) Date de dépôt: 18.09.1990
(51) Int. Cl.: H04N 5/20

(54) **Equipement de réception de signaux vidéo**
Videoempfangsausrüstung
Video signal receiving equipment

(30) Priorité: 22.09.1989 FR 8912483
(43) Date de publication de la demande: 27.03.1991
(73) Titulaire: LABORATOIRE EUROPEEN DE RECHERCHES ELECTRONIQUES AVANCEES, 92400 Courbevoie (FR)
(72) Inventeur: Hamon, Joel, F-92045 Paris la Défense (FR); Dorner, Albert, F-92045 Paris la Défense (FR)
(74) Mandataire: Ruellan-Lemonnier, Brigitte

(56) Documents cités:
- EP-A- 0 271 936
- US-A- 4 149 190
- US-A- 4 628 362
- O. Limann et al.:"Fernsehtechnik ohne Ballast" pages 203-204. 1988 Franzis-Verlag München

## Description

L'invention est relative à un équipement de réception de signaux vidéo.

On sait que les signaux de télévision sont transmis sous forme de lignes successives avec, pour chaque ligne, notamment, une impulsion de synchronisation, un niveau constant servant de référence pour le noir de l'image et appelé "palier de suppression arrière", et le signal vidéo sous forme analogique.

Dans les récepteurs de télévision ou, de façon plus générale, dans les équipements de réception de signaux vidéo, on prévoit des circuits de contrôle automatique de gain qui permettent de maintenir l'amplitude des signaux vidéo entre des limites acceptables pour une bonne qualité de l'image. Ce contrôle automatique de gain est habituellement effectué en détectant un niveau déterminé du signal vidéo, notamment la valeur de crête du signal, et le signal ainsi détecté est utilisé pour commander un dispositif de contrôle de gain ou un amplificateur à gain variable afin de maintenir le signal vidéo entre des limites prescrites.

On a constaté que les circuits connus ne régulent pas toujours de façon satisfaisante l'amplitude du signal vidéo, en particulier quand ce signal vidéo doit être transformé sous forme numérique. En effet, dans ce dernier cas le problème de la dynamique du signal vidéo analogique est particulièrement aigu car le convertisseur/analogique numérique doit être maintenu entre un niveau inférieur et un niveau supérieur, faute de quoi les valeurs sortant des limites ne sont pas restituées de façon correcte. Le document US-A- 4 149 190 décrit un contrôle automatique de gain pour un amplificateur vidéo.

L'invention permet une régulation satisfaisante de l'amplitude du signal vidéo, notamment quand on prévoit un convertisseur analogique/numérique.

L'invention a pour objet un équipement de réception de signaux vidéo comprenant d'une part un élément à gain variable pour maintenir les signaux entre des limites prédéterminées et d'autre part un moyen de clampage pour maintenir le palier de suppression des impulsions de synchronisation ligne desdits signaux vidéo à un niveau constant, ledit équipement comprenant également un circuit de commande dudit gain destiné à maintenir constante l'amplitude des impulsions de synchronisation, ledit équipement étant caractérisé en ce qu'il comprend de plus un moyen pour produire une impulsion de dépassement quand l'amplitude de l'impulsion de synchronisation ligne dépasse une valeur prescrite, ledit circuit de commande commandant l'élément à gain variable en fonction de la fréquence de cette impulsion de dépassement.

Selon un mode de réalisation particulier, ledit moyen produisant une impulsion de dépassement compare le niveau du fond de l'impulsion de synchronisation à un niveau qui est inférieur d'une valeur déterminée au niveau du palier de suppression.

Selon un mode de réalisation particulier, l'équipement comprend un moyen sensible à la fréquence de l'impulsion de dépassement, ledit moyen comportant d'une part un monostable déclenché par les impulsions de dépassement, la durée du signal de sortie du monostable étant égale à, ou peu différente de, la durée d'une ligne, et d'autre part un filtre passe-bas dont la sortie est connectée à l'entrée de commande de gain dudit élément.

Selon un mode de réalisation particulier, la période du monostable est de 60 microsecondes environ.

Selon un mode de réalisation particulier, l'équipement comprend un convertisseur analogique-numérique à sorties parallèles dont une sortie produit un bit représentant, selon sa valeur, le signe de l'écart entre le fond de l'impulsion de synchronisation ligne par rapport à ladite valeur prescrite.

Selon un mode de réalisation particulier, l'équipement comprend d'une part un convertisseur analogique/numérique pour transformer en signaux numériques des signaux vidéo analogiques compris entre un niveau inférieur et un niveau supérieur prédéterminés, correspondant à la plage de conversion dudit convertisseur, et d'autre part un moyen pour maintenir le fond de l'impulsion de synchronisation ligne audit niveau inférieur.

Selon un mode de réalisation particulier, ledit élément à gain variable est commandé pour maintenir ladite coïncidence entre le fond de l'impulsion de synchronisation ligne et ledit niveau inférieur.

Selon un mode de réalisation particulier, le niveau du palier de suppression arrière est supérieur de 0.7 V environ au niveau inférieur.

L'amplitude de l'impulsion de synchronisation ligne restant constante, le signal vidéo reste à la même échelle.

En outre la régularisation d'amplitude du signal vidéo est indépendante du contenu de l'image.

Quand l'élément à gain variable recevant le signal vidéo a sa sortie connectée à l'entrée d'un convertisseur analogique/numérique qui transforme en signaux numériques les signaux analogiques compris entre un niveau inférieur et un niveau supérieur prédéterminés, on prévoit de préférence un moyen pour maintenir le fond de l'impulsion de synchronisation ligne sensiblement au niveau inférieur.

Avec un convertisseur analogique/numérique le dépassement de la valeur prescrite pour l'amplitude de l'impulsion de synchronisation ligne est avantageusement indiqué par un bit (chiffre binaire) en sortie du convertisseur. Le circuit est alors très simple à réaliser.

D'autres caractéristiques et avantages de l'invention apparaîtront avec la description de certains de ses modes de réalisation, celle-ci étant effectuée en se référant aux dessins ci-annexés sur lesquels
- la figure 1 est un schéma d'un dispositif conforme à l'invention, et
- les figures 2, 3, et 4 sont des diagrammes expliquant le fonctionnement du dispositif de la figure 1.

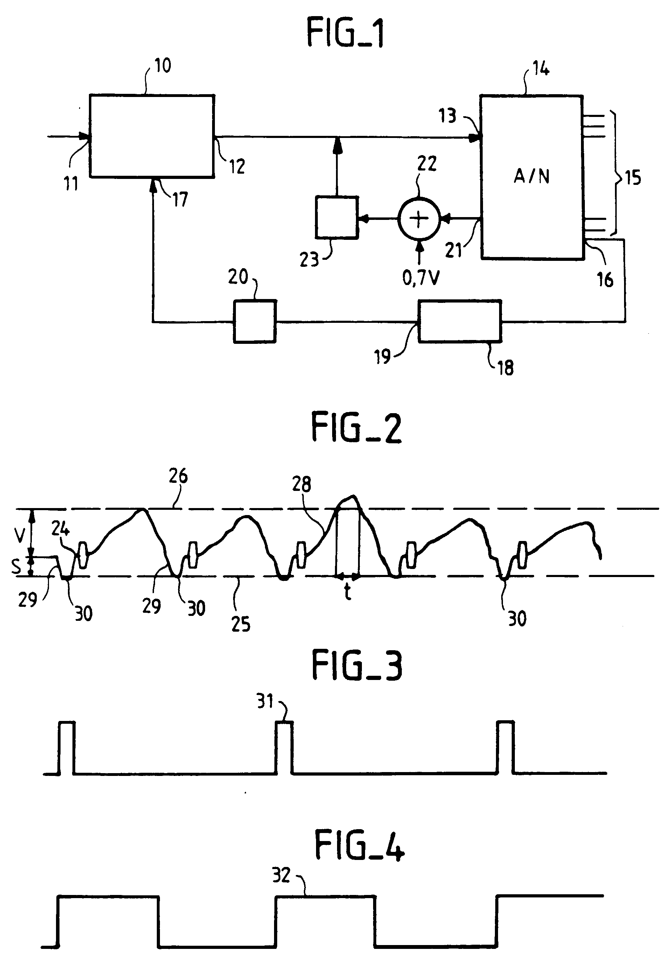

Le dispositif représenté sur la figure 1 est destiné à equiper un récepteur de signaux de télévision embrouillés dans lequel les signaux vidéo embrouillés reçue cont convertis sous forme numérique pour ensuite subir un traitement de désembrouillage.

Ce dispositif comprend un amplificateur 10 à gain variable sur l'entrée 11 duquel est appliqué le signal vidéo et dont la sortie 12 est reliée à l'entrée 13 d'un convertisseur analogique/numérique 14 présentant des sorties parallèles 15 et une sortie supplémentaire 16 sur laquelle apparaît un signal binaire "1" (ou 0) quand l'amplitude de l'impulsion de synchronisation dépasse une valeur déterminée comme expliqué plus loin en relation avec les figures 2 et 3.

Cette sortie 16 est connectée à l'entrée 17 de commande de gain de l'amplificateur 10 par l'intermédiaire d'un monostable 18 dont la durée de maintien dit signal de sortie 19 est d'environ 60 microsecondes (c'est-à-dire presque la durée complète de la ligne), et d'un flltre passe-bas 20.

Le convertisseur analogique/numérique 14 présente une autre sortie 21 sur laquelle apparaît un potentiel représentant la limite inférieure du potentiel admissible pour les signaux à l'entrée 13 de ce convertisseur. Le signal sur la sortie 21 est ajouté à un signal de 0,7 volt grâce à un additionneur 22 et le signal de sortie de ce dernier additionneur agit sur un circuit classique de clampage 23 qui fixe le niveau de noir 24, ou palier arrière de suppression, du signal vidéo (figure 2) à une valeur de 0,7 volt au-dessus du signal de référence 25 apparaissant sur la sortie 21 du convertisseur 14. De façon plus précise : le circuit de clampage 23 contient un condensateur dont la charge est fixée, par le signal sortant de l'additionneur 22, pendant la période correspondant au palier 24 arrière de suppression (figure 2), et cette charge détermine le niveau général du signal vidéo pendant toute la ligne.

Le fonctionnement est le suivant :

Le convertisseur 14 transforme les signaux analogiques appliqués sur son entrée 13 en des signaux numériques qu'il délivre sur ses sorties parallèles 15. Toutefois la conversion n'est effectuée de façon fidèle que si les signaux sur l'entrée 13 ont un potentiel compris entre un niveau inférieur 25 et un niveau supérieur 26 (figure 2). Par exemple si le signal vidéo 28 dépasse pendant une durée t le niveau 26 le convertisseur fournira sur ses sorties parallèles 15 un signal correspondant, pendant l'intervalle t, à ce niveau 26. Le dispositif de la figure 1 permet de maintenir le signal vidéo 28 au-dessous du niveau 26 grâce à l'amplificateur 10 de contrôle de gain et au circuit de clampage 23.

La boucle comprenant l'additionneur 22 et le circuit de clampage 23 permet de maintenir à chaque ligne le niveau de noir 24 à un potentiel de 0,7 volt au-dessus du niveau 25.

En outre, selon une disposition de l'invention, partant de la constatation que l'amplitude maximale s de l'impulsion de synchronisation 29 est proportionnelle à l'amplitude maximale v du signal vidéo proprement dit, pour maintenir le signal vidéo 28 au-dessous du niveau 26 on commande le gain de l'amplificateur 10 à partir d'un signal représentant (notamment par son signe) l'écart entre, d'une part, le niveau bas 30 de l'impulsion de synchronisation ligne 29) et d'autre part, le niveau 25.

Une impulsion de dépassement 31 (figure 3) apparaît sur la sortie 16 du convertisseur 14 quand le fond 30 d'impulsion 29 est au-dessous du niveau 25. Cette impulsion 31 déclenche le monostable 18 qui délivre sur sa sortie 19 un signal 32 (figure 4) de niveau constant pendant 60 microsecondes, c'est-à-dire pendant le reste de la ligne vidéo considérée. Ce signal 32 est appliqué sur l'entrée 17 de contrôle de gain de l'amplificateur 10 par l'intermédiaire du filtre passe-bas 20. Cette entrée reçoit un signal continu dont le niveau dépend de la fréquence à laquelle le niveau 30 descend en-dessous du niveau 25. Ce signal continu sur l'entrée 17 sera maximum si l'amplitude s est trop élevée pour toutes les lignes et, dans ce cas, on commandera une valeur maximum de réduction de gain de l'amplificateur 10 afin que le niveau 30 remonte au-dessus du niveau 25. Par contre si la fréquence pour laquelle l'amplitude s est trop élevée est relativement basse alors la commande de réduction de gain sera relativement faible. De cette manière la réduction de l'amplitude du signal vidéo 28 proprement dit est d'autant plus importante qu'est grand le dépassement du niveau maximum de ce si signal par rapport au niveau admissible 26.

Outre les avantages déjà mentionnés l'invention permet d'effectuer une correction quand le signal vidéo n'est pas visible sur l'écran.

La valeur de 0,7 volt appliquée sur la seconde entrée de l'additionneur 22 permet d'obtenir que, dans les conditions normales, le fond 30 de l'impulsion 29 de synchronisation ligne soit maintenu pratiquement au niveau 25, puisque la valeur normalisée de l'amplitude s de cette impulsion est de 0,6 volt, c'est-à-dire peu différente de 0,7 volt.

Ainsi le fonctionnement du dispositif peut encore s'expliquer de la façon suivante : du fait de l'écart imposé de 0,7 volt entre le niveau de noir 24 et le niveau bas 25 du potentiel du convertisseur 14 l'écart entre le niveau 30 du fond de l'impulsion 29 et le niveau 25 est faible, ce qui entraîne, d'une part, que l'ensemble du signal vidéo (impulsion de synchronisation ligne plus signal vidéo proprement dit) se rapproche plus de la limite basse 25 que de la limite haute 26 et, d'autre part, que, en pratique, le fond 30 de l'impulsion 29 se confond avec le niveau bas 25 par l'effet de la régulation.

L'invention n'est pas limitée à la commande de l'amplitude du signal vidéo appliqué à l'entrée d'un convertisseur analogique/numérique. Elle concerne, de façon plus générale, l'asservissement de l'amplitude du signal vidéo d'un équipement de réception d'émissions de télévision. Elle est caractérisée en ce qu'on commande le gain d'un élément (amplificateur ou contrôle automatique de gain) recevant le signal vidéo de façon que l'amplitude de l'impulsion de synchronisation soit constante.

## Revendications

1. Equipement de réception de signaux vidéo comprenant d'une part un élément (10) à gain variable pour maintenir les signaux entre des limites prédéterminées et d'autre part un moyen de clampage (23) pour maintenir le palier de suppression (24) des impulsions de synchronisation ligne (29) desdits signaux vidéo à un niveau constant, ledit équipement comprenant également un circuit de commande dudit gain destiné à maintenir constante l'amplitude (s) des impulsions de synchronisation, ledit équipement étant caractérisé en ce qu'il comprend de plus un moyen (14, 16) pour produire une impulsion de dépassement (31) quand l'amplitude (s) de l'impulsion (29) de synchronisation ligne dépasse une valeur prescrite, ledit circuit de commande commandant l'élément à gain variable en fonction de la fréquence de cette impulsion de dépassement.

2. Equipement selon la revendication 1, caractérisé en ce que ledit moyen (14, 16) produisant une impulsion de dépassement (31) compare le niveau du fond de l'impulsion de synchronisation (29) à un niveau (25) qui est inférieur d'une valeur déterminée au niveau du palier de suppression (24).

3. Equipement selon l'une des revendications 1 ou 2, caractérisé en ce qu'il comprend un moyen sensible à la fréquence de l'impulsion de dépassement, ledit moyen comportant d'une part un monostable (18) déclenché par les impulsions de dépassement (31), la durée du signal de sortie (32) du monostable (18) étant égale à, ou peu différente de, la durée d'une ligne, et d'autre part un filtre passe-bas (20) dont la sortie est connectée à l'entrée (17) de commande de gain dudit élément (10).

4. Equipement selon la revendication 3, caractérisé en ce que la période du monostable (18) est de 60 microsecondes environ.

5. Equipement selon l'une quelconque des revendications précédentes, caractérisé en ce qu'il comprend un convertisseur analogique-numérique (14) à sorties parallèles (15, 16) dont une sortie (16) produit un bit représentant, selon sa valeur, le signe de l'écart entre le fond de l'impulsion de synchronisation ligne par rapport à ladite valeur prescrite.

6. Equipement de réception de signaux vidéo selon la revendication 1, caractérisé en ce qu'il comprend d'une part un convertisseur analogique/numérique (14) pour transformer en signaux numériques des signaux vidéo analogiques compris entre un niveau inférieur (25) et un niveau supérieur (26) prédéterminés, ledits niveaux correspondant à la plage de conversion dudit convertisseur, et d'autre part un moyen (10, 18, 20) pour maintenir le fond (30) de l'impulsion (29) de synchronisation ligne audit niveau inférieur (25).

7. Equipement selon la revendication 6, caractérisé en ce que ledit élément à gain variable est commandé pour maintenir ladite coïncidence entre le fond (30) de l'impulsion de synchronisation ligne (29) et ledit niveau inférieur.

8. Equipement selon la revendication 7, caractérisé en ce que le niveau du palier de suppression arrière (24) est supérieur de 0.7 V environ au niveau inférieur.

## Patentansprüche

1. Videoempfangsausrüstung, die einerseits ein Element (10) mit variabler Verstärkung umfaßt, um die Signale zwischen vorgegebenen Grenzen zu halten, und andererseits ein Klenm-Mittel (23) , um die Schwarzschulter (24) der Zeilensynchronisationsimpulse (29) der besagten Videosignale auf einem konstanten Pegel zu halten, wobei die besagte Ausrüstung auch eine Schaltung zur Steuerung der besagten Verstärkung umfaßt, die dazu bestimmt ist, die Amplitude (s) der Synchronisationsimpulse konstant zu halten, wobei die besagte Ausrüstung dadurch gekennzeichnet ist, daß sie außerdem ein Mittel (14, 16) zur Erzeugung eines Überschreitungsimpulses (31) umfaßt, wenn die Amplitude (s) des Zeilensynchronisationsimpulses (29) einen vorgegebenen Wert überschreitet, wobei die besagte Steuerschaltung das Element mit variabler Verstärkung in Abhängigkeit von der Frequenz dieses Überschreitungsimpulses steuert.

2. Ausrüstung nach Anspruch 1, dadurch gekennzeichnet, daß das besagte, einen Überschreitungsimpuls (31) erzeugende Mittel (14, 16) den Pegel des Hintergrunds des Synchronisationsimpulses (29) mit einem Pegel (25) vergleicht, der um einen bestimmten Wert kleiner als der Pegel der Schwarzschulter (24) ist.

3. Ausrüstung nach einem der Ansprüche 1 oder 2, dadurch gekennzeichnet, daß sie ein Mittel umfaßt, das gegenüber der Frequenz des Überschreitungsimpulses empfindlich ist, wobei das besagte Mittel einerseits einen durch die Überschreitungsimpulse (31) ausgelösten monostabilen Multivibrator (18) aufweist, wobei die Dauer des Ausgangssignals (32) des monostabilen Multivibrators (18) gleich der oder wenig verschieden von der Dauer einer Zeile ist, und andererseits ein Tiefpaßfilter (20), dessen Ausgang mit dem Eingang (17) zur Steuerung der Verstärkung des besagten Elementes (10) verbunden ist.

4. Ausrüstung nach Anspruch 3, dadurch gekennzeichnet, daß die Schwingungsdauer des monostabilen Multivibrators (18) ungefähr 60 Mikrosekunden beträgt.

5. Ausrüstung nach einem der vorhergehenden Ansprüche, dadurch gekennzeichnet, daß sie einen Analog-Digital-Wandler (14) mit parallelen Ausgängen (15, 16) umfaßt, von denen einer (16) ein Bit erzeugt, das durch seinen Wert das Vorzeichen der Abweichung zwischen dem Hintergrund des Zeilensynchronisationsimpulses und dem besagten vorgegebenen Wert repräsentiert.

6. Videoempfangsausrüstung nach Anspruch 1, dadurch gekennzeichnet, daß sie einerseits einen Analog-Digital-Wandler (14) zur Umwandlung der zwischen einem vorgegebenen unteren Pegel (25) und einem vorgegebenen oberen Pegel (26) enthaltenen analogen Videosignale, wobei die besagten Pegel dem Umwandlungsbereich des besagten Wandlers entsprechen, in digitale Signale, und andererseits ein Mittel (10, 18, 20), um den Hintergrund (30) des Zeilensynchronisationsimpulses (29) auf dem besagten unteren Pegel (25) zu halten, umfaßt.

7. Ausrüstung nach Anspruch 6, dadurch gekennzeichnet, daß das besagte Element mit variabler Verstärkung so gesteuert wird, daß die besagte Übereinstimmung des Hintergrundes (30) des Zeilensynchronisationsimpulses (29) mit dem besagten unteren Pegel aufrechterhalten wird.

8. Ausrüstung nach Anspruch 7, dadurch gekennzeichnet, daß der Pegel der hinteren Schwarzschulter (24) um ungefähr 0,7 V höher als der untere Pegel ist.

## Claims

1. Video signal receiving equipment comprising, on the one hand, a variable-gain element (10) for keeping the signals between predetermined limits and, on the other hand, a clamping means (23) for keeping the porch (24) of the line synchronization pulses (29) of the said video signals at a constant level, the said equipment also comprising a circuit for control of the said gain intended to keep the amplitude (s) of the synchronization pulses constant, the said equipment being characterized in that it additionally comprises a means (14, 16) for producing an overshoot pulse (31) when the amplitude (s) of the line synchronization pulse (29) exceeds a prescribed value, the said control circuit controlling the variable-gain element as a function of the frequency of this overshoot pulse.

2. Equipment according to Claim 1, characterized in that the said means (14, 16) producing an overshoot pulse (31) compares the level of the bottom of the synchronization pulse (29) with a level (25) which is lower, by a defined value, than the level of the porch (24).

3. Equipment according to one of Claims 1 or 2, characterized in that it comprises a means sensitive to the frequency of the overshoot pulse, the said means including, on the one hand, a monostable (18) triggered by the overshoot pulses (31), the duration of the output signal (32) of the monostable (18) being equal to, or little different from, the duration of a line, and, on the other hand, a low-pass filter (20) the output of which is connected to the gain control input (17) of the said element (10).

4. Equipment according to Claim 3, characterized in that the period of the monostable (18) is about 60 microseconds.

5. Equipment according to any one of the preceding claims, characterized in that it comprises an analogue-digital converter (14) with parallel outputs (15, 16), one output (16) of which produces a bit representing, according to its value, the sign of the difference between the bottom of the line synchronization pulse and the said prescribed value.

6. Video signal receiving equipment according to Claim 1, characterized in that it comprises, on the one hand, an analogue/digital converter (14) for converting, into digital signals, analogue video signals lying between a predetermined lower level (25) and a predetermined upper level (26), the said levels corresponding to the conversion range of the said converter, and, on the other hand, a means (10, 18, 20) for keeping the bottom (30) of the line synchronization pulse (29) at the said lower level (25).

7. Equipment according to Claim 6, characterized in that the said variable-gain element is controlled so as to maintain the said coincidence between the bottom (30) of the line synchronization pulse (29) and the said lower level.

8. Equipment according to Claim 7, characterized in that the level of the rear porch (24) is about 0.7 V above the lower level.
